# FASCICULE DE BREVET EUROPEEN

(11) **EP 2 598 374 B1**
(45) Date de publication et mention de la délivrance du brevet: **10.10.2018**
(21) Numéro de dépôt: 11736410.9
(22) Date de dépôt: 29.07.2011
(51) Int. Cl.: B60Q 1/26, F21V 5/00, G02B 6/00, B60J 5/10, F21S 43/14, F21S 43/239, F21S 43/245, F21S 43/241, F21S 43/249, B60Q 1/00, F21V 8/00

(54) **FEUX DE SIGNALISATION POUR VEHICULE AUTOMOBILE**
SIGNALLEUCHTE FÜR KRAFTFAHRZEUG
SIGNAL LAMPS FOR MOTOR VEHICLE

(30) Priorité: 27.07.2011 FR 1102342; 30.07.2010 FR 1003197
(43) Date de publication de la demande: 05.06.2013
(73) Titulaire: Automotive Lighting Rear Lamps France S.A.S., 89330 Saint-Julien Du Sault (FR)
(72) Inventeur: BUISSON, Alain, F-78190 Trappes (FR)
(74) Mandataire: Jacobacci Coralis Harle
(86) Numéro de dépôt international: PCT/EP2011/063158
(87) Numéro de publication internationale: WO 2012/013811

(56) Documents cités:
- EP-A1- 0 256 399
- EP-A1- 0 453 092
- WO-A1-2007/077099
- DE-A1- 19 825 281
- DE-A1-102005 035 063
- JP-A- 4 254 234
- US-A- 4 420 797

## Description

La présente invention concerne le domaine de l'éclairage et de la signalisation des véhicules, notamment des véhicules automobiles. Elle concerne plus particulièrement un dispositif pour feux de signalisation de véhicules automobiles, conçu et agencé pour pouvoir être incorporé aussi bien dans la porte de coffre ou le hayon arrière que dans la partie basse et/ou l'une au moins des parties périphériques du pare-brise d'un véhicule automobile, tout en laissant avantageusement une visibilité par transparence à travers le dispositif lui-même ou une partie de celui-ci.

Les feux de signalisation des véhicules automobiles permettent de remplir différentes fonctions d'éclairage et de signalisation du véhicule comme illustré par le document DE19825281A1. Ils sont fixés sur la structure externe du véhicule, aussi bien à l'avant qu'à l'arrière de celui-ci, et/ou en partie sur la porte de coffre ou le hayon arrière du véhicule.

Dans la pratique, plusieurs des dispositifs optiques de signalisation avant sont généralement fixés en dessous ou à côté des projecteurs et même, de plus en plus souvent, sensiblement sur un même plan horizontal que ceux-ci, mais en décalage vers l'arrière du véhicule, dans des boîtiers sensiblement en forme d'amande. Ces dispositifs occupent un volume non négligeable, au travers duquel le conducteur du véhicule n'a aucune visibilité.

Les feux ainsi regroupés sont notamment les indicateurs de direction ou feux clignotants, les feux anti-brouillard, les feux de position, les feux de stationnement, les feux de recul, les feux de détresse, et les feux diurnes.

Pour les feux arrière, pour lesquels il peut en outre s'agir de catadioptres, la réglementation interdit de placer sur les ouvrants des portes de coffres ou des hayons des fonctions photométriques qui ne seraient pas également présentes sur des parties fixes du véhicule, car les dispositifs ainsi placés sur les ouvrants ne sont destinés qu'à assurer en cas de défaillance les relais des mêmes fonctions procurées sur les parties fixes.

La réglementation interdit de placer sur les ouvrants des portes de coffres ou des hayons des fonctions photométriques qui ne seraient pas également présentes sur des parties fixes
du véhicule, car les dispositifs ainsi placés sur les ouvrants ne sont destinés qu'à assurer en cas de défaillance le relais des mêmes fonctions procurées sur les parties fixes.

La solution la plus fréquente consiste donc à déporter la totalité des dispositifs optiques arrière des véhicules hors de la porte de coffre, ce qui limite nécessairement la largeur de celle-ci. Une autre solution s'est répandue, consistant à scinder en deux les blocs optiques, dont une partie reste ainsi sur la carrosserie du véhicule, tandis que la portion restante est fixée sur la porte du coffre, ce qui rend plus complexe le montage de ces blocs optiques et de leurs connexions.

Des tentatives ont également été faites pour aborder par d'autres moyens la problématique de la largeur d'ouverture de la porte de coffre ou de hayon des véhicules automobiles.

Ainsi, le document EP 1 031 462 propose de placer la totalité des organes d'éclairage arrière dans les angles du véhicule, et de faire en sorte que les organes d'éclairage projettent encore la lumière vers l'arrière même quand la porte de coffre ou le hayon est relevé.

Le document FR 2 859 443 propose, pour rendre visibles des parties de carrosserie des véhicules automobiles sans avoir besoin d'éléments d'éclairement et d'une alimentation électrique, l'utilisation d'un film électroluminescent rendu solidaire par collage sur la pièce de carrosserie de véhicule automobile concernée, éventuellement avec en outre une protection externe transparente.

Le document FR 2 933 665 décrit un volet de coffre arrière de véhicule automobile muni d'au moins une découpe pour rendre au moins partiellement visible un bloc optique fixé sur la structure du véhicule. En option, cette découpe peut correspondre à une partie centrale transparente du bloc optique, dont les éléments d'éclairement peuvent alors être des diodes électroluminescentes tournées vers l'extérieur et disposées en anneau autour d'une zone centrale évidée. Cette zone centrale évidée est libre de tout organe d'éclairement et permet au conducteur d'augmenter sa visibilité dans cette direction, dite visibilité trois-quarts arrière. Les contraintes techniques et industrielles qu'engendrent de telles découpes et la mise en correspondance étroite du bloc optique fixé sur la structure et de la découpe pratiquée dans la porte de coffre ou le hayon constituent un frein au développement d'une telle solution, qui est également compromise par des difficultés pour l'obtention d'une parfaite étanchéité entre le bloc optique à faire apparaître vers l'extérieur et la découpe qui doit lui correspondre au moins partiellement.

En ce qui concerne les feux de signalisation situés à l'avant des véhicules automobiles, les solutions actuelles sont relativement limitées, et toutes volumineuses.

La présente invention vise à procurer un moyen original pour l'éclairage et/ou la signalisation des véhicules automobiles. Elle vise ainsi à surmonter les divers inconvénients respectifs des différents systèmes de feux de signalisation de l'art antérieur en procurant un dispositif optique tel que définit dans la revendication 1, ledit dispositif étant apte à coopérer avec au moins un feu qui est choisi parmi:
un feu intégré à la caisse du véhicule, et
au moins une LED (LED(B)) sur une platine appropriée, comprise dans un sous-boîtier apte à être intégré audit boîtier, et qui est agencée pour pouvoir émettre des rayons lumineux à travers au moins une partie des portions laissées transparentes dudit rideau de lumière ou rideau + guide de lumière.

Avantageusement, le traitement réfléchissant des parties semi-transparentes des platines transparentes se situe sur la face desdites platines tournée vers le rideau de lumière ou rideau + guide de lumière.

Le dispositif selon l'invention utilise ainsi un matériau optique transparent et au moins une source de lumière de type LED (dénommées LED(A)) agencée pour émettre des rayons lumineux se propageant à l'intérieur de l'épaisseur dudit matériau optique transparent, par exemple, mais non-exclusivement, du type du système optique décrit dans la demande de brevet français déposée le 11 décembre 2009 au nom de la même demanderesse et publiée sous le numéro FR 2 953 781, qui est mentionnée ici par référence et à titre de référence.

Dans cette forme de réalisation, le dispositif pour feu de véhicule automobile selon l'invention, comportant un matériau optique transparent et au moins une source de lumière de type LED agencée pour émettre des rayons lumineux se propageant à l'intérieur de l'épaisseur dudit matériau optique transparent, comprend:
- une plaque d'un tel matériau optique transparent formant rideau,
- ladite plaque comportant au moins un renflement allongé bilatéral, de section droite substantiellement circulaire ou polygonale, ayant son axe longitudinal moyen dans le plan moyen de ladite plaque et apte à former un guide de lumière, et
- au moins une LED(A) placée à au moins l'une des extrémités dudit guide de lumière, avec son axe principal orthogonal à l'axe longitudinal dudit guide de lumière.

La présente invention a donc pour objet un dispositif pour feux de signalisation de véhicules automobiles, conçu et agencé pour pouvoir être incorporé dans la porte de coffre ou le hayon arrière et/ou dans une partie appropriée de la structure externe avant d'un véhicule automobile, ledit dispositif étant tel que défini ci-dessus et dans la description qui suit.

Dans la forme de réalisation utilisant les solutions de la demande de brevet français déposée le 11 décembre 2009 sous le No. 09/05984, hormis ce ou ces renflement(s) allongé(s) bilatéral(aux), de section droite substantiellement circulaire ou polygonale, l'élément formé du matériau optiquement transparent constitue en pratique une plaque, plane ou incurvée, et la partie renflée susdite fait partie intégrante de ladite plaque.

Dans la présente description, on dénomme "élément" une plaque portant au moins un renflement ou bourrelet formant guide de lumière, et "partie de dispositif" l'ensemble: élément + diodes électroluminescentes, ainsi que leurs connexions à une source d'énergie et leurs accessoires éventuels. On dénomme "zones cylindriques" ou "zones sensiblement cylindriques" les renflements susdits.

Dans une forme de réalisation préférée, l'élément en matériau optique transparent est ainsi une plaque, plane ou curviligne (et dans ce cas l'angle de courbure peut être variable d'une extrémité à l'autre de la plaque), et la ou les zones renflées traversent celle-ci de part en part, selon un axe longitudinal substantiellement parallèle au plan moyen de la plaque. En cas de pluralité de telles zones sensiblement cylindriques, celles-ci sont de préférence pratiquement parallèles entre elles. Les guides de lumière formés par ces renflements peuvent être linéaires, courbes en deux dimensions ou même courbés une ou plusieurs fois dans les trois dimensions.

Suivant un mode de réalisation préféré de ce système de rideau de lumière ou rideau + guide de lumière, le dispositif susdit comporte un élément ayant au moins une zone sensiblement cylindrique dont la section transversale a un diamètre substantiellement supérieur à l'épaisseur moyenne de la plaque sur la ou les zones limitrophes. On obtient ainsi une diffusion optimisée de la lumière, sensiblement uniformément par réflexion totale dans tout ou substantiellement tout l'élément. Celui-ci peut être en verre ou de préférence en matière plastique, notamment en polyméthacrylate de méthyle (PMMA) ou en polycarbonate (PC). Il peut comporter des inclusions ou des irrégularités classiques disposées à dessein à l'intérieur de l'élément, tandis que le guide de lumière comporte de préférence des prismes de structure et d'angle prédéfinis, pour satisfaire aux exigences de la réglementation en la matière, connues de l'homme du métier.

Un tel élément peut être obtenu par injection, selon une technique classique, dans une épaisseur standard pour ce type de produit, préférentiellement dans une épaisseur d'environ 3 à 4 mm pour la plaque et un diamètre d'environ 7 à 10 mm pour la zone cylindrique ayant fonction de guide de lumière. Pour des raisons pratiques tenant aux contraintes du moulage-démoulage sans contre-dépouille, la ligne de raccordement du renflement avec la plaque comporte de préférence une saignée, par exemple d'environ 1,5 mm de largeur et 2,2 mm d'épaisseur, sans que cela soit limitatif.

Sur la base de la technique antérieure et de ses connaissances propres, l'homme du métier est apte à sélectionner un positionnement de la ou des LED(A) sur ou à proximité des dites zones cylindriques de matériau optique transparent. En pratique, les LED(A) sont placées sur ou à proximité d'un bord périphérique de l'élément, au droit d'une zone sensiblement cylindrique susdite.

Sans vouloir être lié par une quelconque théorie, on pense que les zones cylindriques agissent dans le matériau de l'élément selon l'invention comme des guides de lumière privilégiés, qui diffusent pratiquement la totalité de la lumière émise par la source concernée sur toute la longueur du renflement cylindrique ou en variante polygonal allongé, et de là sur sensiblement toute la surface de l'élément bordant ou entourant les zones sensiblement cylindriques susdites.

L'élément ainsi préconisé en option peut alors être muni d'inclusions et/ou de cavités classiques procurant des foyers de diffusion de la lumière et permettant à celle-ci d'être diffusée soit directement vers l'extérieur, soit indirectement par réflexion sur une face réfléchissante d'un élément disposé du côté intérieur du dispositif, dans un ensemble optique pour véhicule.

Le guide de lumière de l'élément concerné est en option muni d'inclusions classiques agencées pour permettre au rayonnement lumineux provenant de la source de lumière d'être dévié dans les ailes ou parties de plaque, planes ou incurvées, qui s'étendent au voisinage du guide de lumière concerné ou dans les parties de l'élément situées entre deux tels guides de lumière.

Des points ou des lignes de décor peuvent être inclus en option dans la plaque. Ils sont de préférence disposés en quinconce pour des raisons d'homogénéité.

Les cônes classiques introduits dans les guides par des moyens connus sont de préférence toujours normaux à la surface et sans contre-dépouille.

En option, lesdits guides de lumière peuvent également comporter des éléments réflecteurs et/ou des éléments de décor qui, par projection sur les portions vicinales du dispositif suivant l'invention, dessinent virtuellement sur les surfaces planes ou incurvées de celui-ci une forme appropriée.

Des prismes ou autres éléments de discontinuité locale (tels que ceux décrits dans la publication de brevet français No. 2 868 506) peuvent être avantageusement inclus sur la plaque, de manière à permettre à celle-ci de remplir la fonction édictée par la réglementation pour une lanterne de véhicule automobile. Dans le cas d'une lanterne avant, le dispositif est équipé d'une source de lumière blanche.

En pratique, en remplaçant les points inclus dans la plaque par des lignes continues, pointillées ou autres, on peut réaliser des décors variés, que l'éclairement du dispositif révèle avec un effet de relief particulièrement remarquable.

A l'extrémité du guide de lumière opposée à celle qui est équipée d'au moins une LED(A), on peut prévoir soit un cache pour masquer à la vue la lumière s'échappant de la plaque sur son pourtour, soit un élément de renvoi de préférence métallique, soit encore des chanfreins et/ou des prismes.

Le dispositif selon la présente invention peut comporter des caractéristiques optionnelles ou alternatives, qui peuvent être prises séparément ou en combinaison, telles que notamment:
- Le rideau de lumière ou rideau + guide de lumière est du type décrit dans la demande de brevet français le 11 décembre 2009 sous le No. 09/05984 au nom de la même demanderesse.
- Le pourtour extérieur du dispositif comporte un épaulement, procurant un soulignement du contour du feu.
- Des organes et éléments appropriés et agencés de manière convenable autour d'au moins une partie de la périphérie dudit dispositif pour former un boîtier et pour procurer une étanchéité aux liquides et/ou à l'air.
- La glace protégeant le dispositif peut être constituée par la face externe du dispositif selon l'invention lui-même.
- Le feu est compact et aucune des fonctions éclairantes n'est doublée, sauf la fonction lanterne.
- Le feu intérieur traditionnel situé sur la caisse du véhicule remplit en option les fonctions de lanterne, feu de stop, feu de recul, feu anti-brouillard, avec avantageusement un type de diodes électroluminescentes par fonction.
- Un joint traditionnel (par exemple de type snapon) entoure le dispositif fixé sur la porte de coffre ou le hayon, et en assure ainsi l'étanchéité.
- Le ou les feux traditionnellement intégrés à la caisse du véhicule sont dans un agencement directionnel semblable, mais ils sont compris dans le boîtier du dispositif optique pour feux de signalisation avant et ont des LED (LED(B)) pour source lumineuse.
- La ou les LED(B), avantageusement intégrées dans un sous-boîtier, et destinées à émettre des rayons lumineux à travers au moins une partie des portions laissées transparentes dudit rideau ou dudit rideau + guide de lumière sont fixées sur une platine, ou en avant de celle-ci. Avantageusement les circuits intégrés sont reportés sur une autre plaquette, distante de la platine susdite pour favoriser la ventilation et donc le refroidissement de la face arrière des LED(B) et éviter la dégradation par surchauffe desdits circuits intégrés.
- Le dispositif enferme le rideau de lumière ou rideau + guide de lumière entre deux parois, qui sont respectivement des platines transparentes rendues, sur certaines zones choisies à dessein, transparente ou semi-transparente pour la platine externe, et transparente, semi-transparente ou miroir pour la platine interne, avec pour cette dernière une zone sans tain, pour que soit vu le projecteur situé en arrière et éclairant cette zone, et/ou pour que soient vues les LED(B) situées en arrière, tandis que le faisceau d'éclairement du feu (8) et/ou des LED(B) (8) est sensiblement perpendiculaire audit rideau.
- Les LED(B) sont fixées sur une platine intégrée elle-même audit sous-boîtier, tandis qu'une ventilation arrière, naturelle ou forcée, de ladite platine est prévue.
- Les dispositifs optiques ainsi conçus peuvent être de manière connue de l'homme du métier, et avec des adaptations appropriées si nécessaire, soit sur la porte de coffre ou le hayon arrière, soit sur la carrosserie en dessous du pare-brise, soit en partie basse de celui-ci, soit sur ou à proximité des montants latéraux dudit pare-brise, soit encore en partie haute du pare-brise, selon les feux concernés que l'on regroupe ainsi et/ou selon les effets de style que l'homme du métier souhaite réaliser.

L'invention sera mieux comprise, et d'autres objectifs, avantages et caractéristiques de celle-ci apparaîtront plus clairement, à la lumière de la description détaillée ci-après de modes de réalisation du dispositif selon l'invention.

Ces modes de réalisation sont fournis à titre purement illustratif et nullement limitatif, tandis que sont annexées à ladite description des planches de dessins dans lesquelles:
La figure 1 représente une forme de réalisation d'un premier aspect d'un dispositif suivant l'invention en coupe transversale schématique partielle, horizontale, limitée au côté gauche d'une porte de coffre.
La figure 2 représente une vue schématique selon Fig. 1, étendue aux deux blocs optiques respectivement gauche et droit intégrés dans une porte de coffre ou un hayon.
La figure 3 représente une vue de face schématique d'une platine transparente pour le dispositif selon Fig. 1 comportant, conformément à l'invention, une zone rendue semi-transparente et au moins une zone laissée transparente.
La figure 4 représente une forme de réalisation d'un deuxième aspect d'un dispositif suivant l'invention en coupe transversale schématique partielle, horizontale, limitée au côté gauche d'une porte de coffre.
La figure 5 représente une vue schématique selon Fig. 4, étendue aux deux blocs optiques respectivement gauche et droit intégrés dans une porte de coffre ou un hayon, ou intégrables dans une partie de structure externe avant d'un véhicule.
La figure 6 représente une vue de face schématique d'une platine transparente pour le dispositif selon Fig. 4 comportant, conformément à l'invention, une zone rendue semi-transparente et au moins une zone laissée transparente.

Dans ces figures, des numéros identiques désignent des éléments semblables ou équivalents.

En référence aux dessins ainsi succinctement décrits, qui l'illustrent et ne le limitent en aucune manière, le dispositif 1 selon l'invention comporte un rideau de lumière ou rideau + guide de lumière 2, et, parallèlement aux deux faces principales de l'élément 2, deux platines transparentes 3 et 3', comportant chacune un traitement les rendant semi-transparentes sur une ou plusieurs portions 4 de leur surface.

Les portions non semi-transparentes des éléments 3 et 3' sont des zones 5 transparentes, à travers lesquelles sont visibles les faisceaux lumineux émis sensiblement perpendiculairement par des LED(B) 8, par exemple pour un feu de stop 10, un feu clignotant de changement de direction 11, et à gauche un feu anti-brouillard 12 et à droite un feu de recul 13, respectivement de haut en bas.

Le guide de lumière ou rideau + guide de lumière comporte avantageusement des inclusions 6.

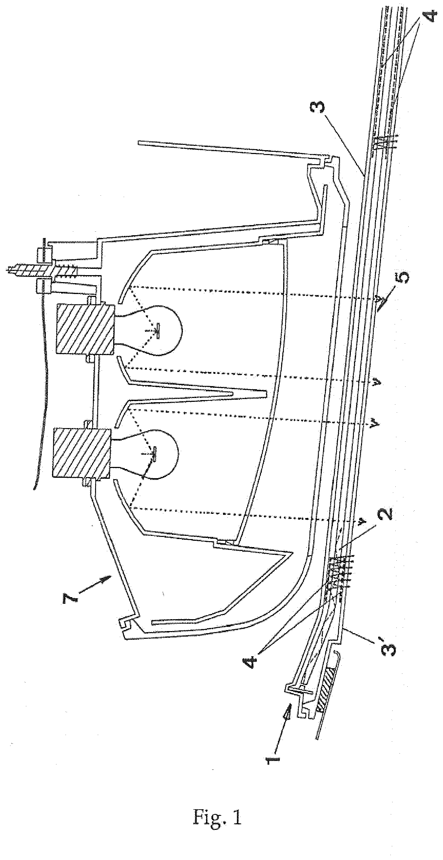

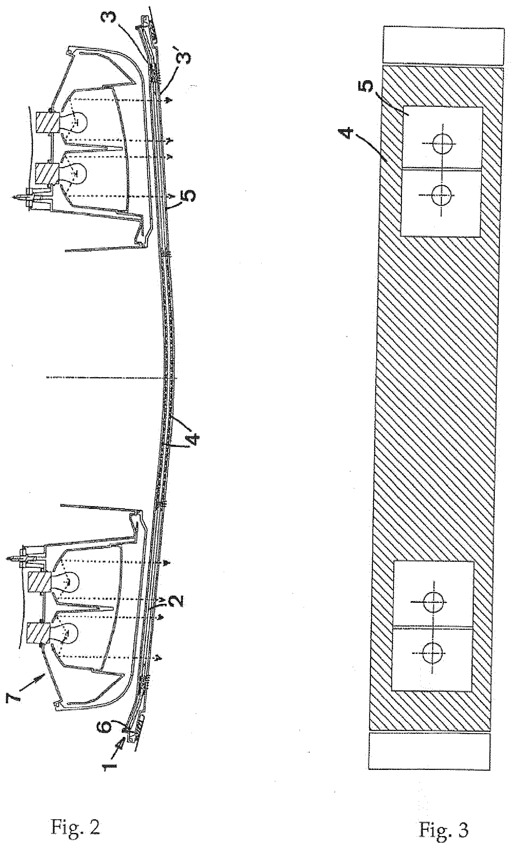

L'ensemble optique dont est doté le véhicule à moteur intégrant le dispositif selon l'invention comprend également, sous un premier aspect (voir Figs. 1-3) un bloc optique 7 constituant un feu de caisse, fixe. Celui-ci peut comporter classiquement au moins une lampe 8 de puissance appropriée, éventuellement sous forme d'une ou plusieurs diodes électroluminescentes.

Un tel dispositif procure un effet de hublot, permettant une augmentation significative de la visibilité dans le rétroviseur, notamment pour ce qu'il est convenu d'appeler la visibilité trois quarts arrière.

En pratique, le dispositif selon l'invention peut procurer jusqu'à 50 cm de gain dans la largeur d'ouverture de la porte de coffre ou du hayon d'un véhicule automobile ainsi équipé.

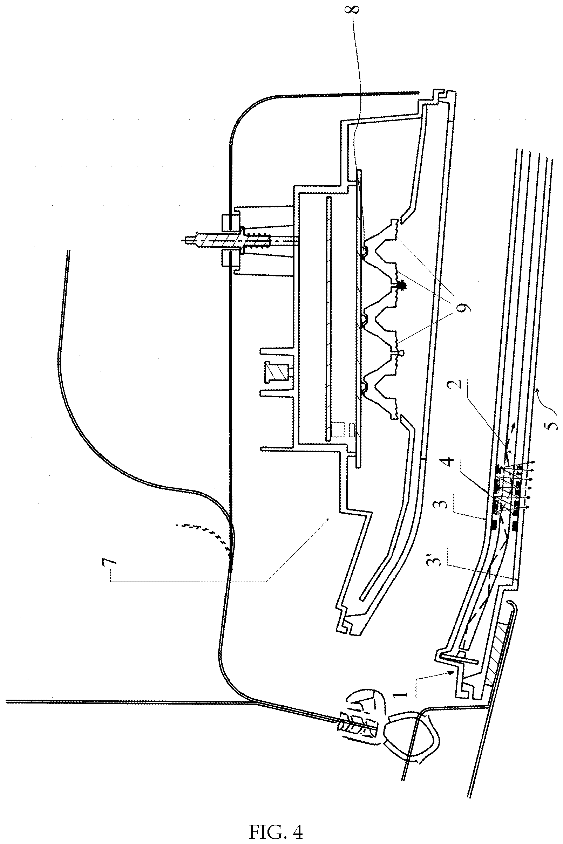

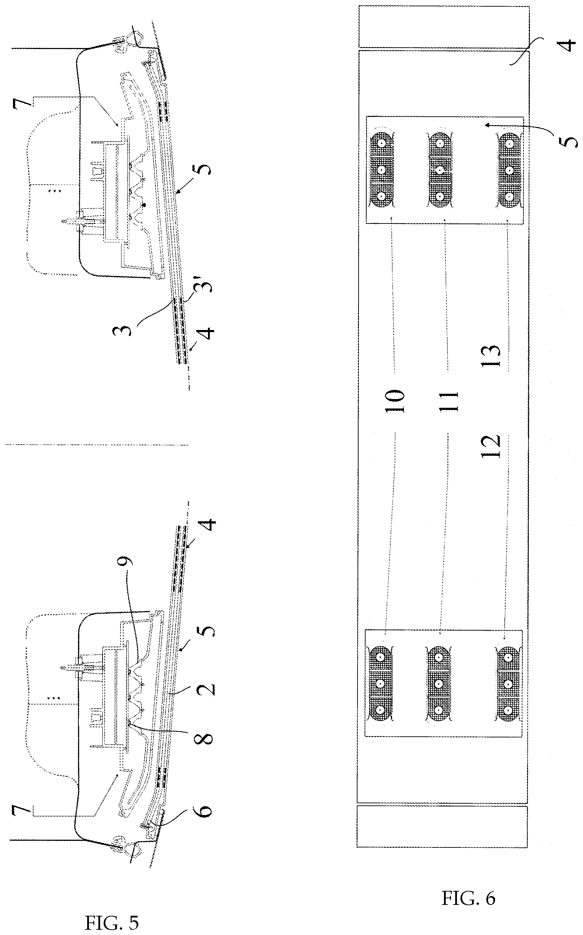

Sous un deuxième aspect (voir Figs. 4-6), l'ensemble optique dont est doté le véhicule à moteur intégrant le dispositif selon l'invention est un dispositif optique modulaire comprenant également un bloc optique 7 constituant un feu ayant des LED(B) 8 intégrées dans un sous-boîtier selon l'invention, avec des pièces optiques classiques 9, et ayant une puissance appropriée, choisie à convenance.

Un tel dispositif procure un effet de hublot, et permet de voir à travers lui.

Son positionnement à l'avant d'un véhicule apparaît tout à fait opportun sur les véhicules automobiles électriques mûs par des moteurs situés sur les arbres de roues, et ainsi exempts de compartiment moteur frontal.

## Revendications

1. Dispositif optique apte à être intégré à une partie de structure externe d'un véhicule automobile, **caractérisé en ce qu'**il comprend les éléments suivants :
a) au moins un sous-ensemble (2, 3, 3') comprenant un rideau de lumière ou un rideau de lumière combiné à un guide de lumière (2), et, de part et d'autre de celui-ci, des platines transparentes (3, 3') ayant chacune au moins une partie maintenue transparente (5) et au moins une autre partie rendue semi-transparente (4),
b) au moins une source de lumière, de préférence de type LED, connectable à une source électrique et agencée pour pouvoir émettre des rayons lumineux se propageant à l'intérieur de l'épaisseur dudit rideau de lumière ou d'un rideau de lumière combiné à guide de lumière, et
c) en option, des moyens d'étanchéité aptes à assurer l'étanchéité du dispositif susdit,
les platines transparentes (3, 3') formant optionnellement un boîtier dans lequel la source de lumière et le rideau de lumière ou le rideau de lumière (2) combiné à un guide de lumière sont intégrés,
ledit dispositif étant apte à coopérer avec au moins un feu (7) intégré à la caisse dudit véhicule de telle manière que ledit feu (7) puisse émettre des rayons lumineux à travers au moins une partie maintenue transparente (5) des platines transparentes (3, 3'), le dit feu comprenant de préférence au moins une LED (8) sur une platine appropriée.

2. Dispositif comprenant une structure externe de véhicule comprenant un dispositif optique selon la revendication 1 et un feu intégré à la caisse du véhicule, ledit feu comprenant de préférence au moins une LED (8) sur une platine appropriée, ledit feu étant agencé pour pouvoir émettre des rayons lumineux à travers au moins une partie maintenue transparente des platines transparentes.

3. Dispositif optique selon la revendication 1 ou 2, **caractérisé en ce que** le traitement réfléchissant des parties semi-transparentes (4) des platines transparentes se situe sur la face desdites platines tournée vers le rideau de lumière ou d'un rideau de lumière combiné à guide de lumière (2).

4. Dispositif optique selon l'une des revendications 1 ou 2, **caractérisé en ce qu'**il met en oeuvre un matériau optique transparent et au moins une source de lumière de type LED agencée pour émettre des rayons lumineux se propageant à l'intérieur de l'épaisseur dudit matériau optique transparent.

5. Dispositif optique selon l'une des revendications 1 ou 2, dans lequel ledit sous-ensemble (2, 3, 3') comporte un matériau optique transparent et au moins une source de lumière de type LED agencée pour émettre des rayons lumineux se propageant à l'intérieur de l'épaisseur dudit matériau optique transparent, **caractérisé en ce qu'**il comprend :
• une plaque d'un tel matériau optique transparent formant rideau (2),
• ladite plaque comportant au moins un renflement allongé bilatéral, de section droite substantiellement circulaire ou polygonale, ayant son axe longitudinal moyen dans le plan moyen de ladite plaque et apte à former un guide de lumière, et
• au moins une LED placée à au moins l'une des extrémités dudit guide de lumière, avec son axe principal orthogonal à l'axe longitudinal dudit guide de lumière.

6. Dispositif selon la revendication 1 ou 2, **caractérisé en ce qu'**il est principalement destiné à faire office de feux clignotants, anti-brouillard, de position, de stationnement, de détresse, et diurnes.

7. Dispositif optique selon la revendication 5, **caractérisé en ce que** l'élément en matériau optique transparent est une plaque, plane ou curviligne, et la ou les zones renflées traversent celle-ci de part en part, selon un axe longitudinal substantiellement parallèle au plan moyen de la plaque.

8. Dispositif optique selon la revendication 7, **caractérisé en ce que** l'élément en matériau optique transparent comporte une pluralité de telles zones renflées sensiblement cylindriques, celles-ci étant de préférence pratiquement parallèles entre elles, et les guides de lumière formés par ces renflements pouvant être linéaires, courbes en deux dimensions ou même courbés une ou plusieurs fois dans les trois dimensions.

9. Dispositif optique selon la revendication 7, **caractérisé en ce que** l'élément susdit est muni d'inclusions et/ou de cavités (6) procurant des foyers de diffusion de la lumière et permettant à celle-ci d'être diffusée soit directement vers l'extérieur, soit indirectement par réflexion sur une face réfléchissante d'un élément disposé du côté intérieur du dispositif, dans un ensemble optique pour véhicule.

10. Dispositif optique selon la revendication 7, **caractérisé en ce que** le guide de lumière de l'élément concerné est muni d'inclusions (6) agencées pour permettre au rayonnement lumineux provenant de la source de lumière d'être dévié dans les ailes ou parties de plaque, planes ou incurvées, qui s'étendent au voisinage du guide de lumière concerné ou dans les parties de l'élément situées entre deux tels guides de lumière.

11. Dispositif optique selon la revendication 7, **caractérisé en ce que** des prismes ou autres éléments de discontinuité locale sont en outre inclus sur la plaque, de manière à permettre à celle-ci de remplir la fonction édictée pour une lanterne de véhicule automobile.

12. Dispositif optique selon l'une quelconque des revendications 1 à 11, **caractérisé en ce qu'**il enferme le rideau de lumière ou le rideau de lumière combiné à un guide de lumière (2) entre deux parois, qui sont respectivement des platines transparentes rendues, sur certaines zones choisies à dessein, transparente ou semi-transparente pour la platine externe, et transparente, semi- transparente ou miroir pour la platine interne, avec pour cette dernière une zone sans tain pour que soit vu le projecteur situé en arrière, dans le coffre, et éclairant cette zone.

13. Partie de structure externe d'un véhicule automobile, **caractérisée en ce qu'**elle comporte un dispositif selon l'une quelconque des revendications 1 à 12.

14. Partie de structure externe d'un véhicule automobile selon la revendication 13, **caractérisée en ce qu'**elle est située dans la partie basse et/ou dans la périphérie du pare- brise.

15. Partie de structure d'un véhicule automobile selon la revendication 13, **caractérisée en ce qu'**elle est constituée par la porte de coffre ou le hayon arrière.

## Patentansprüche

1. Optische Vorrichtung, die dazu ausgelegt ist, in einen Teil einer äußeren Struktur eines Kraftfahrzeugs integriert zu werden, **dadurch gekennzeichnet, daß** sie die folgenden Elemente aufweist:
a) wenigstens eine Untereinheit (2, 3, 3') mit einem Lichtvorhang oder einem mit einem Lichtleiter (2) kombinierten Lichtvorhang und, beiderseits von diesem, durchsichtigen Platinen (3, 3'), von denen jede wenigstens einen durchsichtig gehaltenen Teil (5) und einen teildurchsichtig gemachten Teil (4) aufweist,
b) wenigstens einer Lichtquelle, vorzugsweise vom Typ einer Leuchtdiode, die an eine elektrische Quelle anschließbar ist und dazu ausgelegt ist, Lichtstrahlen auszusenden, die sich im Inneren der Dicke des Lichtvorhangs oder des mit einem Lichtleiter kombinierten Lichtvorhangs ausbreiten, und
c) als Option Dichtmittel, die dazu ausgelegt sind, die Dichtigkeit der genannten Vorrichtung sicherzustellen,
wobei die durchsichtigen Platinen (3, 3') wahlweise ein Gehäuse bilden, in das die Lichtquelle und der Lichtvorhang oder der mit einem Lichtleiter kombinierte Lichtvorhang (2) integriert sind, wobei die Vorrichtung dazu ausgelegt ist, mit wenigstens einer in der Karosserie des Fahrzeugs integrierten Leuchte (7) derart zusammenzuwirken, daß die Leuchte (7) Lichtstrahlen durch wenigstens einen durchsichtig gehaltenen Teil der durchsichtigen Platinen (3, 3') ausstrahlen kann, wobei die Leuchte vorzugsweise wenigstens eine Leuchtdiode (8) auf einer geeigneten Platine aufweist.

2. Vorrichtung mit einer äußeren Fahrzeugstruktur, die eine optische Vorrichtung gemäß Anspruch 1 und eine in der Karosserie des Fahrzeugs integrierte Leuchte aufweist, wobei die Leuchte vorzugsweise wenigstens eine Leuchtdiode (8) auf einer geeigneten Platine aufweist und die Leuchte dazu ausgelegt ist, Lichtstrahlen durch wenigstens einen durchsichtig gehaltenen Teil der durchsichtigen Platinen ausstrahlen zu können.

3. Optische Vorrichtung gemäß Anspruch 1 oder 2, **dadurch gekennzeichnet, daß** sich die reflektierende Behandlung der halbdurchsichtigen Teile (4) der durchsichtigen Platinen auf der Seite der Platinen befindet, die zum Lichtvorhang oder zu einem mit einem Lichtleiter kombinierten Lichtvorhang (2) hin gerichtet ist.

4. Optische Vorrichtung gemäß einem der Ansprüche 1 oder 2, **dadurch gekennzeichnet, daß** sie ein durchsichtiges optisches Material und wenigstens eine Lichtquelle vom Typ einer Leuchtdiode, die dazu ausgelegt ist, Lichtstrahlen auszustrahlen, die sich im Inneren der Dicke des durchsichtigen optischen Materials ausbreiten, verwendet.

5. Optische Vorrichtung gemäß einem der Ansprüche 1 oder 2, bei der die Untereinheit (2, 3, 3') ein durchsichtiges optisches Material und wenigstens eine Lichtquelle vom Typ einer Leuchtdiode, die dazu ausgelegt ist, Lichtstrahlen auszustrahlen, die sich im Inneren der Dicke des durchsichtigen optischen Materials ausbreiten, aufweist, **dadurch gekennzeichnet, daß** sie
- eine Platte aus einem solchen durchsichtigen optischen Material, das einen Vorhang (2) bildet,
- wobei die Platte wenigstens eine längliche beidseitige Verdickung mit im Wesentlichen kreisförmigem oder vieleckigem geraden Querschnitt aufweist, deren mittlere Längsachse in der mittleren Ebene der Platte liegt und die dazu ausgelegt ist, einen Lichtleiter zu bilden, und
- wenigstens eine Leuchtdiode, die an wenigstens einem der Enden des Lichtleiters angeordnet ist, wobei ihre Hauptachse zur Längsachse des Lichtleiters senkrecht ist,
aufweist.

6. Vorrichtung gemäß Anspruch 1 oder 2, **dadurch gekennzeichnet, daß** sie hauptsächlich dazu bestimmt ist, als Blinkleuchte, Nebelscheinwerfer, Standlicht, Parkleuchte, Warnblinkleuchte und Tagfahrlicht zu dienen.

7. Optische Vorrichtung gemäß Anspruch 5, **dadurch gekennzeichnet, daß** das Element aus durchsichtigem optischem Material eine ebene oder gebogene Platte ist und die verdickte(n) Zone(n) diese von einem Ende zum anderen entlang einer im Wesentlichen zur mittleren Ebene der Platte parallelen Längsachse durchqueren.

8. Optische Vorrichtung gemäß Anspruch 7, **dadurch gekennzeichnet, daß** das Element aus durchsichtigem optischem Material eine Mehrzahl solcher im Wesentlichen zylindrischen verdickten Zonen aufweist, wobei diese vorzugsweise praktisch zueinander parallel sind, und wobei die durch diese Verdickungen gebildeten Lichtleiter geradlinig, zweidimensional gebogen oder sogar einmal oder mehrere Male dreidimensional gebogen sein können.

9. Optische Vorrichtung gemäß Anspruch 7, **dadurch gekennzeichnet, daß** das genannte Element mit Einschlüssen und/oder Hohlräumen (6) versehen ist, die Zellen zum Streuen des Lichts bilden und so ermöglichen, daß dieses entweder direkt nach außen oder indirekt durch Reflexion auf einer reflektierenden Oberfläche eines im Inneren der Vorrichtung angeordneten Elements in einer optischen Einheit für Fahrzeuge gestreut wird.

10. Optische Vorrichtung gemäß Anspruch 7, **dadurch gekennzeichnet, daß** der Lichtleiter des betreffenden Elements mit Einschlüssen (6) versehen ist, die so angeordnet sind, daß die von der Lichtquelle kommende Lichtstrahlung in die ebenen oder gebogenen Flügel oder Plattenteile gestreut werden kann, die sich im Bereich des betreffenden Lichtleiters oder in den zwischen zwei solchen Lichtleitern gelegenen Teilen des Elements erstrecken.

11. Optische Vorrichtung gemäß Anspruch 7, **dadurch gekennzeichnet, daß** außerdem Prismen oder andere Elemente mit lokaler Diskontinuität in der Platte eingeschossen sind, um dieser zu ermöglichen, die für eine Kraftfahrzeugleuchte vorgeschriebene Funktion zu erfüllen.

12. Optische Vorrichtung gemäß einem der Ansprüche 1 bis 11, **dadurch gekennzeichnet, daß** sie den Lichtvorhang oder den mit einem Lichtleiter kombinierten Lichtvorhang (2) zwischen zwei Wandungen einschließt, die jeweils durchsichtige Platinen sind, die in bestimmungsgemäß ausgewählten Zonen bei der äußeren Platine durchsichtig oder halbdurchsichtig und bei der inneren Platine durchsichtig, halbdurchsichtig oder als Spiegel gemacht sind, wobei bei letzterer eine Zone ohne Verspiegelung ist, damit die hinten befindliche Leuchte im Kofferraum sichtbar ist und diese Zone beleuchtet.

13. Äußeres Strukturteil eines Kraftfahrzeugs, **dadurch gekennzeichnet, daß** es eine Vorrichtung gemäß einem der Ansprüche 1 bis 12 aufweist.

14. Äußeres Strukturteil eines Kraftfahrzeugs gemäß Anspruch 13, **dadurch gekennzeichnet, daß** es im unteren Teil und/oder im Umfeld der Windschutzscheibe angeordnet ist.

15. Strukturteil eines Kraftfahrzeugs gemäß Anspruch 13, **dadurch gekennzeichnet, daß** es durch die Kofferraumklappe oder die Heckklappe gebildet ist.

## Claims

1. An optical device adapted to be integrated into a part of an outer structure of a motor vehicle, **characterized in that** it comprises the following elements:
a) at least one sub-unit (2, 3, 3') comprising a light curtain or a light curtain combined with a light guide (2) and, on either side the latter, transparent plates (3, 3') each having at least one part kept transparent (5) and at least another part made semi-transparent (4),
b) at least one light source, preferably of the LED type, connectable to a power source and arranged so as to be able to emit light rays propagating inside the thickness of said light curtain or of a light curtain combined with a light guide, and
c) optionally, sealing means adapted to ensure the tightness of said device,
the transparent plates (3, 3') forming optionally a casing in which the light source and the light curtain or the light curtain (2) combined with a light guide are integrated,
said device being adapted to cooperate with at least one lamp (7) integrated to the body of said vehicle in such a manner that said lamp (7) can emit light rays through at least one part kept transparent (5) of the transparent plates (3, 3'), said lamp preferably comprising at least one LED (8) on a suitable plate.

2. A device comprising an outer structure of a vehicle comprising an optical device according to claim 1 and a lamp integrated to the vehicle body, said lamp preferably comprising at least one LED (8) on a suitable plate, said lamp being arranged so as to be able to emit light rays through at least one part kept transparent of the transparent plates.

3. The optical device according to claim 1 or 2, **characterized in that** the reflective treatment of the semi-transparent parts (4) of the transparent plates is located on the face of said plates turned towards the light curtain or a light curtain combined with a light guide (2).

4. The optical device according to one of claims 1 or 2, **characterized in that** it implements a transparent optical material and at least one light source of the LED type arranged so at to emit light rays propagating inside the thickness of said transparent optical material.

5. The optical device according to one of claims 1 or 2, wherein said sub-unit (2, 3, 3') includes a transparent optical material and at least one light source of the LED type arranged so as to emit light rays propagating inside the thickness of said transparent optical material, **characterized in that** it comprises:
- a plate of such a transparent optical material forming a curtain (2),
- said plate including at least one bilateral elongated bulge, of substantially circular or polygonal cross-section, having its mean longitudinal axis in the mean plane of said plate and adapted to form a light guide, and
- at least one LED placed at at least one of the ends of said light guide, with its main axis orthogonal to the longitudinal axis of said light guide.

6. The optical device according to claim 1 or 2, **characterized in that** it is mainly intended to serve as flashing, fog, side marker, parking, hazard waring and daytime running lights.

7. The optical device according to claim 5, **characterized in that** the element made of a transparent optical material is a planar or curvilinear plate, and the bulged area(s) pass straight through the latter, along a longitudinal axis substantially parallel to the mean plane of the plate.

8. The optical device according to claim 7, **characterized in that** the element made of a transparent optical material includes a plurality of such substantially cylindrical bulged areas, these later being preferably practically parallel to each other, and the light guides formed by these bulges can be linear, curved in two dimensions, or even curved once or several times in the three dimensions.

9. The optical device according to claim 7, **characterized in that** said element is provided with inclusions and/or cavities (6) providing light scattering points and allowing the light to be scattered either directly outward, or indirectly by reflection on a reflective face of an element arranged on the inner side of the device, in an optical unit for a vehicle.

10. The optical device according to claim 7, **characterized in that** the light guide of the related element is provided with inclusions (6) arranged so as to allow the light ray coming from the light source to be deflected in the wings or plate parts, planar or curved, that extend near the related light guide and in the parts of the element located between two such light guides.

11. The optical device according to claim 7, **characterized in that** prisms or other elements of local discontinuity are further included on the plate, so as to allow the latter to fulfil the function set out for a motor vehicle lamp.

12. The optical device according to any one of claims 1 to 11, **characterized in that** it encloses the light curtain or the light curtain combined with a light guide (2) between two walls, which are respectively transparent plates made, on certain areas chosen on purpose, transparent or semi-transparent for the outer plate, and transparent, semi-transparent or mirror for the inner plate, with, for the latter, a two-way area so as to allow the lamp located on the rear, in the boot, and lighting this area, to be viewed.

13. A part of an outer structure of a motor vehicle, **characterized in that** it includes a device according to any one of claims 1 to 12.

14. A part of an outer structure of a motor vehicle according to claim 13, **characterized in that** it is located in the lower part and/or in the periphery of the windscreen.

15. A part of an outer structure of a motor vehicle according to claim 13, **characterized in that** it is consisted by the boot door or the rear tailgate.
